(19) Europäisches Patentamt
European Patent Office
Office européen des brevets

(11) **EP 0 822 390 A1**

(12) **EUROPEAN PATENT APPLICATION**
published in accordance with Art. 158(3) EPC

(43) Date of publication:
04.02.1998 Bulletin 1998/06

(51) Int. Cl.$^6$: **G01B 11/30**

(21) Application number: 97902697.8

(86) International application number:
PCT/JP97/00407

(22) Date of filing: 14.02.1997

(87) International publication number:
WO 97/30328 (21.08.1997 Gazette 1997/36)

(84) Designated Contracting States:
DE FR GB

(30) Priority: 16.02.1996 JP 52535/96

(71) Applicant:
MITSUI MINING & SMELTING CO., LTD.
Tokyo 103 (JP)

(72) Inventor: MORIYA, Kazuo
Saitama 362 (JP)

(74) Representative:
Modiano, Guido, Dr.-Ing. et al
Modiano, Josif, Pisanty & Staub,
Baaderstrasse 3
80469 München (DE)

(54) **SURFACE ROUGHNESS MEASURING APPARATUS AND METHOD**

(57) An image of an object surface (3) is formed on an optical axis (7) which is inclined by a predetermined angle θ with respect to the normal (5) of the object surface (3), and this optical image is converted to electrical image data. The roughness of the object surface is determined on the basis of a positional change in the direction of inclination of a contrast in these image data as well as the predetermined angle.

Fig. 1

EP 0 822 390 A1

## Description

Technical Field

This invention relates to an apparatus and method for measuring the surface roughness of a semiconductor wafer or the like.

Background Art

The surface roughness of a sample such as a semiconductor wafer has conventionally been measured by a method of using a microscope having an observation magnification corresponding to a degree of roughness of the target sample for measuring a change in image of the sample surface within the visual field of the microscope.

If the target sample has a serrated section, as shown in Fig. 4, the projections and recesses of the teeth 1 cannot simultaneously be focused due to the relationship with a focal depth D of the microscope. The degree of roughness in the vertical direction cannot be measured from the focal position on the recesses and projections.

There is thus proposed a method for vertically moving a sample or microscope to obtain contrasts of the sample image varying with every change of positions of the sample and microscope due to the movement thereof and defining, as a measure of roughness, an amount of movement (m) within which the contrasts are at a level of predetermined value of $C_0$ or higher, as shown in Fig. 5.

According to this method, however, an expensive actuator for finely moving the microscope or sample in the vertical direction is required. In addition, a long measurement time is required because image data must be obtained while vertically moving the microscope and sample.

Disclosure of the Invention

It is an object of this invention to provide an apparatus and method capable of measuring such vertical roughness as described above within a short period of time with a simple arrangement.

In order to achieve the above object, there is provided a roughness measuring apparatus comprising an imaging means, arranged such that the optical axis thereof is inclined with respect to a target surface at a predetermined angle from the normal direction of the target surface, for forming an image of the target surface, a photoelectric conversion means for photoelectrically converting the formed image to obtain image data, and an information processing means for obtaining a roughness of the target surface on the basis of positional change of the contrasts in this image date in the direction of said inclination, and said predetermined angle.

The information processing means obtains the roughness of the target surface, e.g., in terms of $x \cdot \tan\theta$, from said predetermined angle $\theta$ and a distance x of a range in which the contrasts exceed a predetermined value, in the positional change of the contrasts in said image data in said inclination direction.

Further, a roughness measuring method of this invention comprises forming an image of a target surface on an optical axis inclined with respect to the target surface at a predetermined angle from the direction normal to the target surface, photoelectrically converting the image into image data and then obtaining a roughness of the target surface on the basis of the predetermined angle and the positional change of contrasts obtained in the image data in the direction of said inclination.

Brief Description of the Drawings

Fig. 1 is a view showing a roughness measuring apparatus according to an embodiment of the present invention;
Fig. 2 is a graph showing a state in which the roughness of a surface is obtained by the apparatus shown in Fig. 1;
Figs. 3A and 3B are views showing the relationship between the focal point and part of a target surface when measuring the roughness by the apparatus shown in Fig. 1;
Fig. 4 is a sectional view for explaining a problem in a prior art; and
Fig. 5 is a graph for explaining a roughness measuring method in another prior art.

Best Mode for Carrying Out the Invention

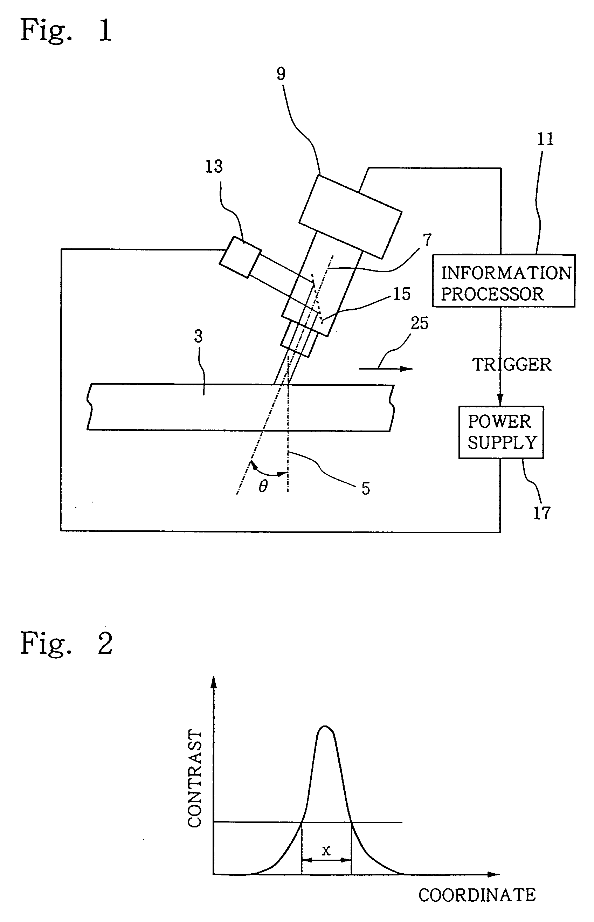

Fig. 1 shows a roughness measuring apparatus according to an embodiment of this invention. As shown in Fig. 1, this apparatus comprises a TV camera 9 having an optical axis 7 inclined with respect to a target surface 3 at a predetermined angle θ from the direction 5 normal to the target surface 3 to form an image of the target surface 3 and photoelectrically convert this image into image data, and an information processor 11 for obtaining the roughness of the target surface on the basis of the predetermined angle θ and the positional variation or change of contrasts in the image data in the direction of said inclination. This roughness measuring apparatus also comprises a stroboscopic flash unit 13 for illuminating the target surface. Light emitted from the stroboscopic flash unit 13 is guided towards the optical axis 7 of the TV camera 9 by a half mirror 15 in the TV camera 9. The light is emitted from the stroboscopic flash unit 13 by driving a power source 17 for the stroboscopic flash unit 13 in response to a trigger signal from the information processor 11.

The information processor 11 obtains changes in contrast of the image data of the target surface 3 inclined with respect to the target surface 3 in the direction of the optical axis 7 and obtains the roughness of the target surface 3 in terms of $x \cdot \tan\theta$ from the predetermined angle $\theta$ and a distance $x$ of the range in which the contrasts in these changes exceed a predetermined value.

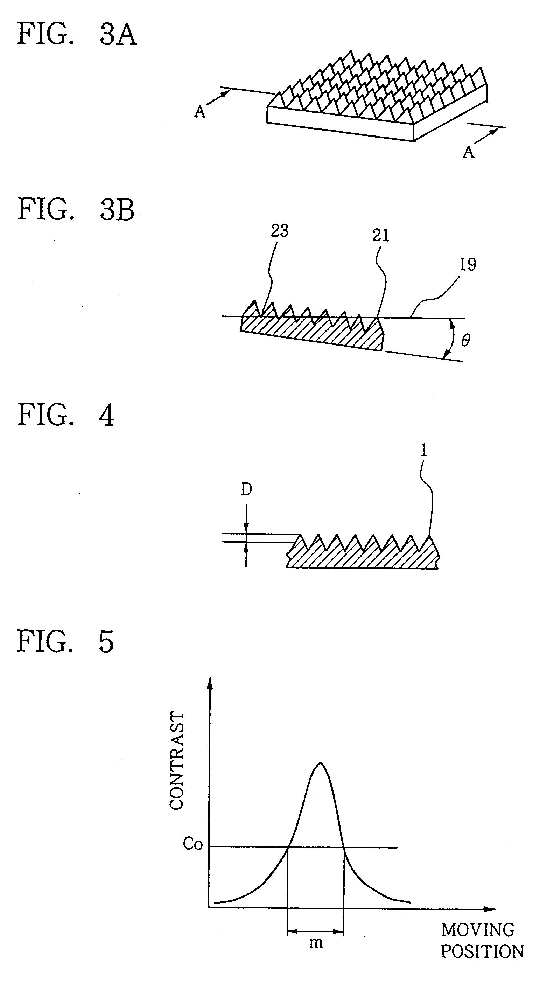

Figs. 3A and 3B show the relationship between the focal position and part of the target surface 3, Fig. 3A being a perspective view showing part of the target surface 3, and Fig. 3B a sectional view thereof taken along the line A - A in the direction inclined with respect to the optical axis 7. As shown in Fig. 3B, the focal position 19 simultaneously coincides with a projection 21 and a recess 23 of the serrated surface. When image data is obtained once, the contrast distribution in Fig. 2 can be obtained thereby to enable and a measurement for surface roughness.

With this arrangement, when the target surface 3 is moved in the direction of an arrow 25 and, further, a first measurement position on the target surface 3 is located at a predetermined position within the visual field of the TV camera 9, the information processor 11 supplies a trigger signal to the stroboscopic flash unit power source 17, so that the stroboscopic flash unit 13 emits a flash. This flash illuminates the visual field of the TV camera 9 above the target surface 3 through the half mirror 15. In synchronism with this emission of the flash, the information processor 11 obtains image data within the visual field by the TV camera 9 and obtains a roughness value of the target surface 3 from the contrast distribution in the image data, as described above. The next measurement position on the target surface 3 is located within the visual field of the TV camera 9 to obtain a roughness value at this position. In this manner, subsequent measurement positions of the target surface 3 are in turn located, and roughness values are obtained at high speed by receiving image data only one time at each measurement position. In this case, even if the target surface 3 slightly vertically fluctuates, the peak of the contrasts in FIG. 2 is only shifted substantially without raising any problem as to the measurement.

Industrial Applicability

As has been described above, according to this invention, the roughness at one position of the target surface can be measured by receiving image data only once. Therefore, roughness measurements at a large number of positions can be performed at a high speed, and at the same time, the measurements can be performed with a simple arrangement which does not require a mechanism for finely vertically moving the target surface or imaging means.

Claims

1. An apparatus for measuring the roughness of a surface comprising:

   an imaging means, arranged such that the optical axis thereof is inclined with respect to a target surface at a predetermined angle from the direction normal to said target surface, for forming an image of said target surface,
   a photoelectric conversion means for photoelectrically converting the formed image into image data; and
   an information processing means for obtaining a roughness of said target surface on the basis of the predetermined angle and positional changes of contrasts in the image data in the direction of said inclination.

2. An apparatus according to claim 1, wherein said information processing means obtains the roughness of said target surface on the basis of the predetermined angle and a distance of a range in which the contrasts exceed a predetermined value in the positional changes of contrasts in the image data in the direction of said inclination.

3. A method for measuring the roughness of a surface comprising:

   forming an image of a target surface on an optical axis inclined with respect to said target surface at a predetermined angle from a normal direction of said target surface;
   photoelectrically converting the image into image data; and then
   obtaining a roughness of said target surface on the basis of the predetermined angle and the positional changes of contrasts in the image data in the direction of said inclination.

# Fig. 1

INFORMATION PROCESSOR

TRIGGER

POWER SUPPLY

# Fig. 2

CONTRAST

COORDINATE

FIG. 3A

FIG. 3B

FIG. 4

FIG. 5

| INTERNATIONAL SEARCH REPORT | International application No. |
|---|---|
| | PCT/JP97/00407 |

**A. CLASSIFICATION OF SUBJECT MATTER**

Int. Cl$^6$  G01B11/30, 102

According to International Patent Classification (IPC) or to both national classification and IPC

**B. FIELDS SEARCHED**

Minimum documentation searched (classification system followed by classification symbols)

Int. Cl$^6$  G01B11/30

Documentation searched other than minimum documentation to the extent that such documents are included in the fields searched

| Jitsuyo Shinan Koho | 1926 – 1996 |
|---|---|
| Kokai Jitsuyo Shinan Koho | 1971 – 1995 |
| Toroku Jitsuyo Shinan Koho | 1994 – 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 7-280541, A (K.K. Aoki Seiki Seisakusho), October 27, 1995 (27. 10. 95)(Family: none) Paragraphs (0018) to (0021) | 1 – 3 |
| Y | JP, 57-4505, A (Kawasaki Steel Corp.), January 11, 1982 (11. 01. 82)(Family: none) Page 4, lower left column, line 3 to page 5, line 6 | 1 – 3 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| April 7, 1997 (07. 04. 97) | April 15, 1997 (15. 04. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)